# EUROPEAN PATENT SPECIFICATION

(11) **EP 1 129 128 B1**
(45) Date of publication and mention of the grant of the patent: **12.03.2003**
(21) Application number: 99943135.6
(22) Date of filing: 03.09.1999
(51) Int. Cl.: C08J 5/22, H01M 8/10

(54) **COMPOSITE MEMBRANE FOR FUEL CELL COMPRISING A POROUS NON-WOVEN FIBER SHEET**
KOMPOSITMEMBRAN FÜR BRENNSTOFFZELLE ENTHALTEND EINE PORÖSE VLIESSTOFFFOLIE
MEMBRANE COMPOSITE POUR PILE A COMBUSTIBLE COMPRENANT UNE COUCHE DE FIBRES NON-TISSEES

(30) Priority: 16.10.1998 GB 9822569
(43) Date of publication of application: 05.09.2001
(73) Proprietor: JOHNSON MATTHEY PUBLIC LIMITED COMPANY, London SW1Y 5BQ (GB)
(72) Inventor: FONGALLAND, Dharshini, Chryshantha, Slough SL1 2JD (GB); GASCOYNE, John, Malcolm, High Wycombe, Bucks HP14 4BB (GB); RALPH, Thomas, Robertson, Berkshire RG30 2QJ (GB)
(74) Representative: Nunn, Andrew Dominic
(86) International application number: GB9902935
(87) International publication number: WO00023510

(56) References cited:
- EP-A- 0 875 524
- DD-A- 283 478
- US-A- 4 842 620
- US-A- 5 523 181
- US-A- 5 547 551
- PATENT ABSTRACTS OF JAPAN vol. 1995, no. 02, 31 March 1995 (1995-03-31) & JP 06 304548 A (MATSUSHITA ELECTRIC IND CO LTD), 1 November 1994 (1994-11-01)
- PATENT ABSTRACTS OF JAPAN vol. 006, no. 266 (C-142), 25 December 1982 (1982-12-25) & JP 57 159502 A (TOYO BOSEKI KK), 1 October 1982 (1982-10-01)

## Description

The present invention relates to a substrate for a composite membrane that is of use in electrochemical devices, particularly fuel cells, and a process for the manufacture of the substrate and composite membrane.

Electrochemical cells invariably comprise an ion-conducting electrolyte and two electrodes, the anode and cathode, at which the desired electrochemical reactions take place. Electrochemical cells may be found in a range of devices, for example fuel cells, batteries, sensors, electrodialysis reactors and electrolytic reactors. They have a diverse range of applications, including the electrolysis of water, chemical synthesis, salt splitting, water purification, effluent treatment and metal finishing, among others.

A fuel cell is an energy conversion device that efficiently converts the stored chemical energy of its fuel into electrical energy. It does so by combining either hydrogen, stored as a gas or methanol, stored as a liquid or a gas, with oxygen to generate electrical power. The hydrogen or methanol is oxidised at the anode and oxygen is reduced at the cathode. Both electrodes are of the gas diffusion type. The electrolyte has to be in contact with both electrodes, and may be acidic or alkaline, and liquid or solid, in nature. In proton exchange membrane fuel cells (PEMFC), the electrolyte is a solid, ion-conducting, *i.e.* a proton-conducting, polymer membrane. The membrane is commonly based on a copolymer of perfluorosulphonic acid and tetrafluoroethylene. The combined structure formed from the membrane and the two gas diffusion electrodes is known as the membrane electrode assembly (MEA).

Conventionally, solid ion-conducting membrane electrolytes useful in fuel cells and other devices are selected from commercially-available membranes, for example perfluorinated membranes sold under the trade names Nafion® (E I DuPont de Nemours and Co.), Aciplex® (Asahi Chemical Industry) and Flemion® (Asahi Glass KK). For application in the PEMFC, they are typically below 200µm in thickness to ensure a high level of ionic conductivity. One of the problems experienced with these conventional proton-conducting membranes used for PEM fuel cell construction, is the dimensional changes that occur as the level of water content (hydration) of the membrane changes. This is a particular problem during fabrication of the MEA, in which the membrane is typically in a highly hydrated form, as the stresses produced by changes in hydration during the conventionally-employed thermal bonding process can be large enough to break the bond between either the catalyst and the membrane or the catalyst and the substrate. Furthermore, these dimensional changes lead to considerable difficulties in handling membranes during the fabrication of MEAs, particularly large area MEAs in excess of, for example, 500cm². The thinner the membrane, the more difficult the handling becomes.

Yet further, it is current practice that most MEAs are fabricated as single items, with areas of, for example, 500cm² in a batch-type process. It is critical to the successful commercialisation of the PEMFC that lower cost, high volume, MEA manufacturing processes be developed in the future, such as a continuous fabrication process. The problem of dimensional change of the membrane with changes in hydration on a continuous process, which may employ membranes of many hundreds of metres in length, would then be an even more serious issue, and would add significant complications and cost to the manufacturing process.

With thicker types of membrane *(e.g.* >350µm) developed for other applications, it has been possible to incorporate 'macro' reinforcing materials, such as woven polytetrafluoroethylene (PTFE), to minimise such dimensional changes. However, these thicker materials have too low an ionic conductivity to be of use in the PEMFC. US patent 5,547,551 describes the fabrication of ultra-thin reinforced membranes, below 25µm in thickness, comprising proton-exchange polymeric material incorporated into an expanded porous PTFE membrane. According to Kolde *et al*, Electrochemical Society Proceedings 95 (23) 193-201 (1995), these reinforced membranes have considerably improved dimensional stability compared to the conventional non-reinforced membranes, such as Nafion® 117 which shows shrinkage upon dehydration from the hydrated state. However, such materials have a higher specific resistance (*i.e.* lower ionic conductivity) by a factor of at least two than a non-reinforced pure proton-conducting membrane such as Nafion® 117.

The higher specific resistance of the above reinforced membranes means that, in practice, they must be much thinner than the equivalent pure proton-conducting membrane to maintain the same overall conductivity and thus cell performance. However, reducing the thickness of the membrane reduces the advantages that a reinforced membrane can provide. For example, there is a limit to the extent to which the thickness of the membrane can be reduced, since the durability and longevity can also decrease, and reactant gas cross-over through the membrane is more liable to occur, leading to a reduction in cell performance. Furthermore, the problems associated with dimensional stability and handling for MEA fabrication can be exacerbated with thinner membranes.

There is therefore the need to overcome the disadvantages of conventional pure and prior art reinforced membranes, by providing a novel composite ion-exchange membrane having a significantly improved dimensional stability and satisfactory handling without compromising the ionic conductivity and reactant gas cross-over parameters. Furthermore, there is a need to take account of the likely process(es) by which the membrane would be manufactured in the future in choosing an appropriate membrane composition. In particular, with the prospect of continuous fabrication processes mentioned above, it is not only the structure of the membrane that may be critical. In a composite membrane generally comprising a porous substrate of fibres impregnated, coated or otherwise associated with the ion-conducting polymer (*e.g.* Nafion®), the strength and stability of the substrate itself would be an important factor.

Accordingly, the present invention provides a substrate, suitable for the preparation of a composite membrane, which substrate comprises a porous matrix of fibres, characterised in that the fibres comprise mixed amorphous silica fibres that are bound with a binder.

The amorphous silica for use in the substrate according to the invention is to be distinguished from crystalline quartz, although there is a tendency in an industrial context for the terms "quartz" and "silica" to be used interchangeably. Although both are chemically silicon dioxide, quartz is the crystalline form and is both hard and brittle, whereas the fibrous materials (the amorphous silica for use in the substrate of the invention) are made from either natural or synthetic quartz, and are amorphous and glass like in character, having no crystalline structure.

By "mixed amorphous silica fibres" is meant a mixture of both one or more micro-fine amorphous silica fibres and one or more of chopped strands of amorphous silica. For example, chopped silica fibres are available from Quartz et Silice BP, France under the trade name Quartzel. The base filament is available as a continuous fibre in 14µm, 9µm or 7µm diameters and can be supplied as chopped strands in a range of lengths such as 20mm chopped silica fibres. Silica microfibres are available from Johns Manville Insulation Group, Denver, USA, under the trade name of Q-Fibre, such as Q-Fibre Type 106. These are available in a range of nominal fibre diameters from 0.4µm to 4µm. The amount of microfibre and chopped fibres in the mixture is in the range of from 95 to 5% and 5 to 95% by weight of the mixture, respectively. Preferably, the amounts are 90 to 10% and 10 to 90% w/w, respectively. More preferably, they are present in a range 70 to 30% to 30 to 70% w/w, respectively.

The mixed amorphous silica fibres within the substrate are preferably randomly orientated in the x and y direction (in-plane), producing a two-dimensional isotropic structure. Additionally, random orientation in the z direction (through-plane) can be introduced with the inclusion of very short fibres, typically lengths of less than or equal to 0.2mm or very fine fibres, typically of diameters less than or equal to 1µm. The fibres typically have a diameter in the range of from 0.1µm to 50µm, preferably 0.2µm to 20µm and, more preferably, about 0.4µm to 9µm. The fibres typically have lengths in the range of from 0.05mm to 300mm, suitably 0.5mm to 150mm, preferably 1mm to 50mm and, more preferably, about 6mm to 20mm.

The porous substrate typically has at least 50%, suitably at least 75%, of the individual pore sizes being greater than 1µm in at least one direction, although a porous substrate wherein some of the pores are less than 1µm in all directions is within the scope of the invention.

It is also necessary to coat the fibres with one or more different materials after forming the porous substrate network to act as a binder and provide the necessary physical integrity of the structure. Fibres may be coated with a solution or dispersion of ion-exchange polymeric materials, such as Nafion® 1100EW solution, or other non-ion-conducting polymers such as PTFE, FEP, PVDF, Viton®, polyethylene and polypropylene, such as are further described below, or inorganic materials such as amorphous silica, titania, zirconia, zirconium silicate, zirconium phosphates or the like, or mixtures thereof. Solutions of ion-exchange polymers may be either organic or aqueous, and the polymer may be either in protonic form or in ion-exchanged form, wherein the proton site is replaced with, *e.g*., Na⁺ or t-butylammonium ion.

The substrate of the present invention is suitably for use in the preparation of a composite membrane for use in a fuel cell. When for use in a fuel cell, the total thickness of the membrane is suitably less than 200µm and preferably less than 100µm.

For its use in the preparation of a composite membrane, the substrate is preferably associated with an ion-conducting polymer. Accordingly, the present invention further provides a composite membrane comprising a porous substrate of fibres and at least one ion-conducting polymer, characterised in that the substrate comprises mixed amorphous silica fibres, as defined hereinabove, that are bound with a binder.

The substrates according to the present invention, when used as a membrane by the incorporation of an ion-conducting polymer therein, produce a surprising effect on the dimensional stability of the membrane when subject to full hydration conditions. Accordingly, when tested by the method described hereinafter in the Examples, the dimensional changes in membranes based on the substrates according to the present invention result in less than or equal to about ±9% change in their areas.

For PEM fuel cell applications, the ion-conducting polymer is a proton-conducting polymer, examples of such polymers being well known to those skilled in the art. More than one proton-conducting polymer may be present and/or a non-ion-conducting polymer may also be included in the novel membrane of the invention.

The proton conducting polymers suitable for use in the present invention may include, but are not limited to:
1) Polymers which have structures with a substantially fluorinated carbon chain optionally having attached to it side chains that are substantially fluorinated. These polymers contain sulphonic acid groups or derivatives of sulphonic acid groups, carboxylic acid groups or derivatives of carboxylic acid groups, phosphonic acid groups or derivatives of phosphonic acid groups, phosphoric acid groups or derivatives of phosphoric acid groups and/or mixtures of these groups. Perfluorinated polymers include Nafion®, Flemion® and Aciplex® commercially available from E. I. DuPont de Nemours (U.S. Patents 3,282,875; 4,329,435; 4,330,654; 4,358,545; 4,417,969; 4,610,762; 4,433,082 and 5,094,995), Asahi Glass KK and Asahi Chemical Industry respectively. Other polymers include those covered in U.S. Patent 5,595,676 (Imperial Chemical Industries plc) and U.S. Patent 4,940,525 (Dow Chemical Co.)
2) Perfluorinated or partially fluorinated polymers containing aromatic rings such as those described in WO 95/08581, WO 95/08581 and WO 97/25369 (Ballard Power Systems) which have been functionalised with SO₃H, PO₂H₂, PO₃H₂, CH₂PO₃H₂, COOH, OSO₃H, OPO₂H₂, OPO₃H₂. Also included are radiation or chemically grafted perfluorinated polymers, in which a perfluorinated carbon chain, for example, PTFE, fluorinated ethylene-propylene (FEP), tetrafluoroethylene-ethylene (ETFE) copolymers, tetrafluoroethylene-perfluoroalkoxy (PFA) copolymers, poly (vinyl fluoride) (PVF) and poly (vinylidene fluoride) (PVDF) is activated by radiation or chemical initiation in the presence of a monomer, such as styrene, which can be functionalised to contain an ion exchange group.
3) Fluorinated polymers such as those disclosed in EP 0 331 321 and EP 0345 964 (Imperial Chemical Industries plc) containing a polymeric chain with pendant saturated cyclic groups and at least one ion exchange group which is linked to the polymeric chain through the cyclic group.
4) Aromatic polymers such as those disclosed in EP 0 574 791 and US Patent 5,438,082 (Hoechst AG) for example sulphonated polyaryletherketone. Also aromatic polymers such as polyether sulphones which can be chemically grafted with a polymer with ion exchange functionality such as those disclosed in WO 94/16002 (Allied Signal Inc.).
5) Nonfluorinated polymers include those disclosed in U.S. Patent 5,468,574 (Dais Corporation) for example hydrocarbons such as styrene-(ethylene-butylene)- styrene, styrene-(ethylene-propylene)-styrene and acrylonitrile-butadiene-styrene co- and terpolymers where the styrene components are functionalised with sulphonate, phosphoric and/or phosphonic groups.
6) Nitrogen containing polymers including those disclosed in U.S. Patent 5,599,639 (Hoechst Celanese Corporation), for example, polybenzimidazole alkyl sulphonic acid and polybenzimidazole alkyl or aryl phosphonate.
7) Any of the above polymers which have the ion exchange group replaced with a sulphonyl chloride (SO₂Cl) or sulphonyl fluoride (SO₂F) group rendering the polymers melt processable. The sulphonyl fluoride polymers may form part of the precursors to the ion exchange membrane or may be arrived at by subsequent modification of the ion exchange membrane. The sulphonyl halide moieties can be converted to a sulphonic acid using conventional techniques such as, for example, hydrolysis.

Non-ion conducting polymeric materials which may be used in addition to the one or more ion conducting or proton conducting polymers include PTFE, FEP, PVDF, Viton® and hydrocarbon types such as polyethylene, polypropylene and polymethylmethacralate.

Other ion-conducting polymeric materials which are not proton conducting polymers may be used in the filler material. For example, such polymers can be used for applications requiring a bipolar membrane or a completely anion exchange membrane. Anion exchange polymers are generally based on quaternary ammonium groups, rather than the fixed sulphonic acid groups in proton conducting polymers. These include, for example, the tetraalkyl ammonium group (-N⁺R₃) and the quaternary ammonium centre in Tosflex® membranes (-N(R₁)(CH₂)_{y}N⁺(R₃)) supplied by Tosoh. However, it can be envisaged that all of the proton exchange polymers described above could have anion exchange equivalents.

The polymer is suitably applied to the coated fibres (substrate) in the form of a solution, the solvents of which may be either organic or aqueous based. Solvents of all of the above polymers may include or may be modified to include, water, methanol and/or other aliphatic alcohols, ethers, acetone, tetrahydrofuran (THF), n-methyl-pyrrolidone (NMP), dimethyl sulphoxide (DMSO), dimethyl formamide (DMF), dimethyl acetamide (DMAc), or protonic solvents such as sulphuric acid or phosphoric acid, and/or mixtures of the above. However, it has been found that an essentially aqueous solution of the polymer as described in EP 0 731 520 is preferred.

A flexible free-standing, dimensionally stable composite membrane is produced by using the substrate of the present invention, resulting in greater handlability. The membrane of the invention is therefore also more amenable to high volume, continuous production processes, as described hereinafter. The high dimensional stability of the membrane enables thinner membranes to be produced, which are more amenable to higher volume MEA manufacturing processes than are current membranes, at similar thicknesses. Current materials show very large dimensional changes with changes in the levels of water content that occur during MEA fabrication, and are therefore very difficult to handle during the MEA fabrication process.

In a further embodiment, a laminated membrane comprising more than one polymer-containing layer is provided, at least one layer of which is a composite membrane of the invention. Where a laminated membrane is formed that comprises more than one composite membrane layer of the invention, each layer may comprise either the same or different types of fibres and porous substrates, and also the same or different types of polymeric material embedded within the porous substrate of each composite membrane layer. Using such a laminated structure, it is possible, for example, to tailor the properties of the laminate membrane opposed to the anode and cathode sides in the MEA of a proton exchange membrane fuel cell, for example, to improve water management in the fuel cell, or to be able to use lower cost proton-conducting polymers to form a substantial part of the laminate membrane.

Composite membranes comprising the substrate of the present invention are suitable for low cost manufacture, and the substrates and membranes may be manufactured by:
(i) forming a porous substrate of, preferably randomly orientated individual, mixed amorphous silica fibres by adapting a continuous manufacturing process, which for example may be based on wet lay processes such as those employed in paper-making, or dry lay processes employed, for example, to produce non-woven fabrics and felts; and, optionally, thereafter,
(ii) impregnating the fibre matrix substrate with the polymeric material to produce a membrane. This can be done by any number of coating processes such as printing, rolling, K-bar, doctor blade methods, spraying or thin-film casting.

For example, in a process based on a paper-making technology to prepare a composite membrane, the fibres are dispersed in water to form a dilute slurry and thereafter a continuous structure is formed by the controlled deposition of said slurry onto a moving mesh bed, de-watering the solids, and drying and compacting the fibre network. The solution containing the dispersion of the binder material can be applied either at the wet end of the process, *i.e.* before the drying stage, or after the network has been dried. This is followed by nip roller coating of the substrate to fill it with a solution of the ion-conducting polymeric material, and further compaction and drying of the membrane under a suitable time, temperature and pressure regime to produce the final thin film or sheet of fibre/polymer composite membrane.

A major advantage of using a continuous manufacturing method, such as a conventional paper making technique, is that the composite membrane is easily manufactured in a fewer number of steps than prior art composite membranes, thus making it more cost-effective and commercially viable. The membrane may also be produced in continuous lengths of many metres and widths of equal to or greater than one metre. A further advantage is that it is possible to combine a membrane of the present invention with one or more electrode layers as described in European patent specification number EP 0 791 974 to form a membrane electrode assembly at the same rate as each individual component could be produced.

The present invention also relates to a membrane electrode assembly and a method for the manufacture thereof, wherein the composite membrane is one according to the present invention. A still further aspect of the present invention relates to a fuel cell and a method for the manufacture thereof, which fuel cell comprises a composite membrane of the present invention.

The present invention is not limited to the use of the composite membrane in a fuel cell and any electrochemical device which comprises a composite membrane of the invention is within the scope.

The present invention will now be described by way of example only which is not intended to be limiting thereof.

### EXAMPLE 1

### PREPARATION OF MIXED AMORPHOUS SILICA/ALCOHOLIC NATION® SUBSTRATE

A mixture of chopped silica fibres (Type QC9/33-20mm from Quartz et Silice BP 521-77794 Nemours, Cedex, France) (0.18g), and silica microfibre (Q fibre, type 106 from Johns Manville, Insulation Group, PO Box 5108, Denver, CO, USA) (037g) were dispersed with mixing, in water (3000ml). A non-woven matrix was fabricated from the resulting mixture in a single-step process, based on the principles of paper-making technology, as a sheet size of 855cm² (33cm diameter) in a sheet former (design based on standard SCA Sheet former from AB Lorentzen & Wettre, Box 4, S-163 93 Stockholm, Sweden). The fibre sheet was removed from the wire and air dried at 150°C.

The non-woven sheet was sprayed with a 5% solution of Nafion®, 1100 EW in lower aliphatic alcohols (Solutions Technologies Inc, Mendenhall, PA 19357, USA) to give a dry Nafion® loading of 0.78g.

### EXAMPLE 2

### PREPARATION OF MIXED AMORPHOUS SILICA/PTFE/SILICA SUBSTRATE

A non-woven matrix was fabricated according to the method and materials of Example 1. The fibre sheet, as formed on the wire and whilst still wet, was sprayed with a binder solution comprising a 10wt% aqueous dispersion of polytetrafluoroethylene (Teflon GP1®; ICI Chemicals and Polymers Ltd, PO Box 4, Thornton, Cleveleys, Blackpool, FY5 4QD) and a 10wt% solution of colloidal silica (Syton® T40AS; DuPont Speciality Chemicals, Havennummer 500, Wilmington Straat, 2030 Antwerp, Belgium) in a 1:1 ratio to give a loading of 0.27g of the Teflon/silica mixture. The sheet was removed from the wire and air dried at 150°C, then fired in air at 280°C

### EXAMPLE 3

### PREPARATION OF MIXED AMORPHOUS SILICA/SILICA SUBSTRATE

A non-woven matrix was fabricated according to the method and materials of Example 1. The fibre sheet, as formed on the wire and whilst still wet, was sprayed with a binder solution comprising a 20wt% solution of colloidal silica (Syton® T40AS; DuPont Speciality Chemicals, Havennummer 500, Wilmington Straat, 2030 Antwerp, Belgium) to give a loading of 0.1g of the silica. The sheet was removed from the wire and air dried at 150°C.

### COMPARATIVE EXAMPLES

### NAFION® 1135, 115 & 117 MEMBRANES

**Nafion® membrane type 1135** (produced by E I DuPont de Nemours, Polymer Products Department, Fayetteville, NC, USA) was used as received. A 10x10cm square was cut from the bulk membrane. A measurement of the membrane's mass was taken before the sample was placed in a sealable polyethylene bag of known weight. With the bag seal open, the membrane was dried overnight (∼16 h) at 40°C under vacuum (∼10mbar). After releasing the vacuum, the bag was quickly sealed before being weighed. [Mass loss from the membrane and bag together was adjusted for the average mass loss from three identical bags containing no membrane]. Lengths in the x and y directions were measured whilst the dried membrane was still in the sealed bag to establish the dehydrated dimensions.

The membrane was placed in 2 litres of de-ionised water, heated to boiling and maintained at boiling for 90 minutes. The membrane was then removed from the de-ionised water and the excess surface water removed by blotting with filter paper. The x and y dimensions were then measured using the same procedure as before.

**Nafion® membranes types 115 and 117** (also produced by E I DuPont de Nemours, Polymer Products Department, Fayetteville, NC, USA) were also used as received. A 10x10cm square was cut from each bulk membrane and treated according to the above procedure.

The dimensional changes and area change for each comparative membrane are recorded in Table 1.

### EXAMPLE 4

### PREPARATION OF TRIPLE LAMINATE MEMBRANES USING SUBSTRATE OF EXAMPLE 1

The non-woven silica fibre/binder matrix prepared according to Example 1 was placed on a sheet of sintered PTFE and a solution of perfluorosulphonic acid (Nafion® produced by E I DuPont de Nemours) in the aqueous form as described in EP 731520 was applied to the silica fibre matrix. The structure was filled with the aqueous Nafion® to achieve a total solid Nafion® loading of 6.55mg/cm².

A further two sheets were prepared in the same fashion. The three sheets were placed on top of each other and sandwiched between two thin, non-porous PTFE sheets. The sandwich was pressed at 90 to 100psig for six minutes at 177°C to produce a triple laminate membrane.

A 10x10cm square was cut from the bulk membrane and treated by the same procedure as described in the Comparative Examples. The results are recorded in Table 1.

### EXAMPLE 5

### PREPARATION OF TRIPLE LAMINATE MEMBRANES USING SUBSTRATE OF EXAMPLE 2

The non-woven silica fibre/binder matrix prepared according to Example 2 was treated according to the method and materials of Example 4 (total solid Nafion® loading of 7.3mg/cm²) to produce a triple laminate membrane, whose results also appear in Table 1.

### EXAMPLE 6

### PREPARATION OF TRIPLE LAMINATE MEMBRANES USING SUBSTRATE OF EXAMPLE 3

The non-woven silica fibre/binder matrix prepared according to Example 3 was treated according to the method and materials of Example 4 (total solid Nafion® loading of 7.29mg/cm²) to produce a triple laminate membrane, whose results also appear in Table 1.

### EXAMPLE 7

### PREPARATION OF SINGLE SHEET MEMBRANES USING SUBSTRATE OF EXAMPLE 1

A single sheet of the non-woven mixed silica fibre matrix with the sprayed alcoholic Nafion® binder was formed as described in Example 1 and filled with a solution of perfluorosulphonic acid (Nafion® produced by E I DuPont de Nemours) in the aqueous form as described in EP 731 520 to achieve a total solid Nafion® loading of 6.49mg/cm².

The sheet was sandwiched between two thin, non-porous PTFE sheets. The sandwich was pressed at 90 to 100psig for six minutes at 177°C to produce a membrane.

A 10x10cm square was cut from the bulk membrane and treated by the same procedure as described in the Comparative Examples. The results are recorded in Table 1.

### EXAMPLE 8

### PREPARATION OF SINGLE SHEET MEMBRANES USING SUBSTRATE OF EXAMPLE 2

The non-woven silica fibre/binder matrix prepared according to Example 2 was treated according to the method and materials of Example 7 (total solid Nafion® loading of 7.24mg/cm²) to produce a membrane whose results also appear in Table 1.

### EXAMPLE 9

### PREPARATION OF SINGLE SHEET MEMBRANES USING SUBSTRATE OF EXAMPLE 3

The non-woven silica fibre/binder matrix prepared according to Example 2 was treated according to the method and materials of Example 7 (total solid Nafion® loading of 6.38mg/cm²) to produce a membrane whose results also appear in Table 1.

**TABLE 1**

| **SILICA MIXED FIBRE MEMBRANES** | | | | | |
|---|---|---|---|---|---|
| Example Number | Membrane | Binder Type | Post-boil Dimensional Changes | | |
| | | | x (%) | y (%) | Area (%) |
| CP | Nafion® 1135 | N/A | +4.1 | +25.0 | +30.0 |
| CP | Nafion® 115 | N/A | +15.8 | +20.5 | +39.0 |
| CP | Nafion® 117 | N/A | +13.4 | +225 | +39.0 |
| 4 | triple laminate | alcoholic Nafion® | +05 | 0 | +0.5 |
| 5 | triple laminate | 1:1 colloidal silica/PTFE | +15 | +3.0 | +4.6 |
| 6 | triple laminate | colloidal silica | +3.0 | +2.0 | +5.6 |
| 7 | single sheet | alcoholic Nafion® | -1.0 | -1.0 | -2.0 |
| 8 | single sheet | 1:1 colloidal silica/PTFE | -4.0 | -45 | -8.0 |
| 9 | single sheet | colloidal silica | -1.0 | -2.0 | -3.0 |

## Claims

1. A substrate, suitable for the preparation of a composite membrane, which substrate comprises a porous non-woven fibre sheet, **characterised in that** the fibres comprise a mixture of one or more amorphous silica microfibres and one or more chopped strand(s) of amorphous silica and the fibres are bound with a binder.

2. A substrate according to claim 1 wherein the fibres comprise a mixture of both microfibres and chopped fibres in the range of from 95:5% to 5:95% by weight of the mixture respectively.

3. A substrate according to claim 2 wherein the fibres comprise a mixture of both microfibres and chopped fibres in the range of from 70:30% to 30:70% by weight of the mixture respectively.

4. A substrate according to any preceding claim wherein the microfibres and the chopped fibres have a diameter in the range of from 0.1µm to 50µm.

5. A substrate according to claim 4 wherein the microfibres and the chopped fibres have a diameter in the range of from 0.4µm to 9µm.

6. A substrate according to any preceding claim, wherein the binder comprises a solution or dispersion of ion-exchange polymeric materials, or non-ion-conducting polymers, or inorganic materials or mixtures thereof.

7. A composite membrane comprising a porous substrate of fibres and at least one ion-conducting polymer, **characterised in that** the substrate is one according to any preceding claim.

8. A composite membrane according to claim 9, which when tested by the method described herein in the Examples, results in less than or equal to about ±9% change in the area.

9. A composite membrane according to claim 8 or claim 9 wherein the total thickness of the membrane is less than 200µm.

10. A composite membrane according to any one of claims 7 to 9 for use in a fuel cell.

11. A process for the manufacture of a substrate according to any one of claims 1 to 6, which process comprises
(a) dispersing the fibres in water to form a slurry;
(b) depositing the slurry onto a mesh bed to form a network;
(c) drying and compacting the fibre network; and
(d) applying, before or after step (c), a dispersion of binder.

12. A process for the manufacture of a membrane according to any one of claims 7 to 10, which process comprises
(i) forming a porous substrate of, preferably randomly orientated, individual amorphous silica fibres bound with a binder by a process according to claim 11; and, thereafter,
(ii) impregnating the porous substrate with a polymeric material to produce a membrane.

13. A process according to claim 12, wherein step (ii) is carried out by nip roller coating of the substrate to fill it with a solution of ion-conducting polymeric material, and further compaction and drying of the membrane.

14. A membrane electrode assembly comprising a substrate according to any one of claim 1 to 6 and/or a composite membrane according to any one of claims 7 to 10.

15. A fuel cell comprising a substrate according to any one of claim 1 to 6 and/or a composite membrane according to any one of claims 7 to 10.

## Patentansprüche

1. Substrat, das für die Herstellung einer Verbundmembran geeignet ist und eine poröse Faservliesbahn umfasst, **dadurch gekennzeichnet, dass** die Fasern eine Mischung aus einer oder mehreren amorphen Siliciumdioxid-Mikrofasern und einer oder mehreren amorphen Siliciumdioxid-Stapelfasern umfassen und die Fasern mit einem Bindemittel gebunden sind.

2. Substrat nach Anspruch 1, worin die Fasern eine Mischung sowohl aus Mikrofasern als auch aus Stapelfasern in einer Menge in dem Bereich von 95 : 5 Gew./Gew.-% bis 5 : 95 Gew./Gew.-%, jeweils bezogen auf das Gewicht der Mischung, umfassen.

3. Substrat nach Anspruch 2, worin die Fasern eine Mischung sowohl aus Mikrofasern als auch aus Stapelfasern in dem Bereich von 70 : 30 bis 30 : 70 Gew./Gew.-%, jeweils bezogen auf das Gewicht der Mischung, umfassen.

4. Substrat nach irgendeinem vorhergehenden Anspruch, worin die Mikrofasern und die Stapelfasern einen Durchmesser in dem Bereich von 0,1 bis 50 um haben.

5. Substrat nach Anspruch 4, worin die Mikrofasern und die Stapelfasern einen Durchmesser in dem Bereich von 0,4 bis 9 um haben.

6. Substrat nach irgendeinem vorhergehenden Anspruch, worin das Bindemittel umfasst eine Lösung oder Dispersion von Ionenaustausch-Polymermaterialien oder nicht-ionenleitenden Polymeren oder anorganischen Materialien oder Mischungen davon.

7. Verbundmembran, die ein poröses Substrat aus Fasern und mindestens einem ionenleitenden Polymer umfasst, **dadurch gekennzeichnet, dass** das Substrat ein solches nach irgendeinem vorhergehenden Anspruch ist.

8. Verbundmembran nach Anspruch 7, die bei dem Test nach dem Verfahren, wie es in den Beispielen beschrieben ist, eine Flächenänderung von ≤ etwa ± 9 % ergibt.

9. Verbundmembran nach Anspruch 7 oder 8, wobei die Gesamtdicke der Membran weniger als 200 µm beträgt.

10. Verbundmembran nach einem der Ansprüche 7 bis 9 für die Verwendung in einer Brennstoffzelle.

11. Verfahren zur Herstellung eines Substrats nach einem der Ansprüche 1 bis 6, das umfasst
(a) das Dispergieren der Fasern in Wasser zur Bildung einer Aufschlämmung;
(b) die Ablagerung der Aufschlämmung auf einem Maschensieb zur Bildung eines Netzwerks;
(c) das Trocknen und Pressen des Fasemetzwerks; und
(d) das Aufbringen einer Dispersion eines Bindemittels vor oder nach Durchführung der Stufe (c).

12. Verfahren zur Herstellung einer Membran nach einem der Ansprüche 7 bis 10, das umfasst:
(i) die Bildung eines porösen Substrats aus vorzugsweise willkürlich orientierten einzelnen amorphen Siliciumdioxid-Fasern, die mit einem Bindemittel gebunden sind, nach einem Verfahren nach Anspruch 11 und
(ii) das anschließende Imprägnieren des porösen Substrats mit einem polymeren Material zur Herstellung einer Membran.

13. Verfahren nach Anspruch 12, worin die Stufe (ii) durchgeführt wird durch Quetschwalzen-Beschichten des Substrats zum Füllen desselben mit einer Lösung eines ionenleitenden polymeren Materials und anschließendes Pressen und Trocknen der Membran.

14. Membran-Elektroden-Anordnung, die ein Substrat nach einem der Ansprüche 1 bis 6 und/oder eine Verbundmembran nach einem der Ansprüche 7 bis 10 umfasst.

15. Brennstoffzelle, die ein Substrat nach einem der Ansprüche 1 bis 6 und/oder eine Verbundmembran nach einem der Ansprüche 7 bis 10 umfasst.

## Revendications

1. Substrat approprié à la préparation d'une membrane composite, ledit substrat comprend une feuille de fibres poreuses non-tissées, **caractérisé en ce que** les fibres comprennent un mélange d'une ou plusieurs microfibres amorphes de silice et d'un ou plusieurs fil(s) coupés de silice amorphe et **en ce que** les fibres sont attachées par un liant.

2. Substrat selon la revendication 1, dans lequel les fibres comprennent un mélange de microfibres et de fibres coupées dans la plage comprise respectivement entre 95:5% et 5:95% en poids du mélange.

3. Substrat selon la revendication 2, dans lequel les fibres comprennent un mélange de microfibres et de fibres coupées dans la plage comprise respectivement entre 70:30% et 30:70% en poids du mélange.

4. Substrat selon n'importe quelle revendication précédente, dans lequel les microfibres et les fibres coupées ont un diamètre compris entre 0,1 µm et 50 µm.

5. Substrat selon la revendication 4, dans lequel les microfibres et les fibres coupées ont un diamètre compris entre 0,4 µm et 9 µm.

6. Substrat selon n'importe quelle revendication précédente, dans lequel le liant comprend une solution ou une dispersion de matériaux polymères échangeurs d'ions ou de polymères non conducteurs d'ions ou de matières inorganiques ou de leurs mélanges.

7. Membrane composite comprenant un substrat poreux de fibres et au moins un polymère conducteur d'ions, **caractérisée en ce que** le substrat est un substrat selon n'importe quelle revendication précédente.

8. Membrane composite selon la revendication 9 qui, lorsqu'elle est testée selon le procédé décrit ici dans les exemples, résulte en un changement inférieur ou égal à environ ± 9% dans la zone.

9. Membrane composite selon la revendication 8 ou la revendication 9, dans laquelle l'épaisseur totale de la membrane est inférieure à 200 µm.

10. Membrane composite selon l'une quelconque des revendications 7 à 9, pour utilisation dans une pile à combustible.

11. Procédé pour la fabrication d'un substrat selon l'une quelconque des revendications 1 à 6, ledit procédé comprend :
(a) la dispersion des fibres dans l'eau pour former une pâte;
(b) le dépôt de la pâte sur un lit maillé pour former un réseau;
(c) le séchage et le compactage du réseau de fibres; et
(d) l'application, avant ou après l'étape (c), d'une dispersion de liant.

12. Procédé pour la fabrication d'une membrane selon l'une quelconque des revendications 7 à 10, ledit procédé comprend :
(i) la formation d'un substrat poreux de fibres individuelles de silice amorphe, de préférence orientées aléatoirement, attachées par un liant selon un procédé selon la revendication 11 ; et ensuite,
(ii) l'imprégnation du substrat poreux avec un matériau polymère pour produire une membrane.

13. Procédé selon la revendication 12, dans lequel l'étape (ii) est réalisée par l'enrobage du substrat par rouleau pinceur pour le remplir d'une solution de matériau polymère conducteur d'ions, puis par le compactage et le séchage de la membrane.

14. Ensemble d'électrode à membrane comprenant un substrat selon l'une quelconque des revendications 1 à 6 et/ou une membrane composite selon l'une quelconque des revendications 7 à 10.

15. Pile à combustible comprenant un substrat selon l'une quelconque des revendications 1 à 6 et/ou une membrane composite selon l'une quelconque des revendications 7 à 10.
